# EUROPÄISCHE PATENTSCHRIFT

(11) **EP 3 578 794 B1**
(45) Veröffentlichungstag und Bekanntmachung des Hinweises auf die Patenterteilung: **13.10.2021**
(21) Anmeldenummer: 19176066.9
(22) Anmeldetag: 23.05.2019
(51) Int. Cl.: F02M 21/06, F02M 31/16, F02M 31/125, F02M 31/18

(54) **ZUFÜHRSYSTEM ZUM ZUFÜHREN EINES CNG- ODER LNG-KRAFTSTOFFES**
FEED SYSTEM FOR FEEDING A CNG OR LNG FUEL
SYSTÈME D'ALIMENTATION PERMETTANT L'ALIMENTATION EN CARBURANT GNC OU GNL

(30) Priorität: 04.06.2018 DE 102018113239
(43) Veröffentlichungstag der Anmeldung: 11.12.2019
(73) Patentinhaber: Volkswagen AG, 38440 Wolfsburg (DE)
(72) Erfinder: Bippes, Michael, 38112 Braunschweig (DE); Weißner, Michael, 38442 Wolfsburg (DE)
(74) Vertreter: karo IP

(56) Entgegenhaltungen:
- AU-A4- 2009 100 157
- DE-A1-102008 063 566
- DE-A1-102014 210 806
- US-A- 4 688 537
- KREPEC T ET AL: "IMPROVED CONCEPT OF HYDROGEN ON-BOARD STORAGE AND SUPPLY FOR AUTOMOTIVE APPLICATIONS", INTERNATIONAL JOURNAL OF HYDROGEN ENERGY, ELSEVIER SCIENCE PUBLISHERS B.V., BARKING, GB, Bd. 15, Nr. 1, 6. Juni 1989 (1989-06-06), Seiten 27-32, XP000084916, ISSN: 0360-3199, DOI: 10.1016/0360-3199(90)90127-K

## Beschreibung

Die Erfindung betrifft ein Zuführsystem zum Zuführen eines CNG- oder LNG-Kraftstoffes aus einem Tank hin zu einer Umsetzungsvorrichtung, z. B. einer Verbrennungskraftmaschine oder einer Heizungsvorrichtung. Das Zuführsystem kann insbesondere in mobilen Systemen, z. B. in einem Kraftfahrzeug, eingesetzt werden. Das Zuführsystem kann auch in stationären Systemen, z. B. zum Zuführen des Kraftstoffes zu einer Heizungsvorrichtung, in der der Kraftstoff durch Verbrennung zur Erzeugung von Wärme umgesetzt wird, eingesetzt werden.

Bei Gasfahrzeugen, die mit CNG ("compressed natural gas") bzw. mit LNG ("liquefied natural gas") betrieben werden, ist z. B. eine Kaltabfahrt, insbesondere unter hoher Last, kritisch, weil bereits nach wenigen Metern ein Gasdruckregler oder andere Komponenten wie z. B. Injektoren vereisen können und damit das Kraftfahrzeug liegenbleiben kann.

Es ist bereits bekannt, den Gasdruckregler in den Wasserkreislauf des Kraftfahrzeugs einzubinden. Diese Lösung hat sich jedoch als zu träge herausgestellt, d. h. die Wärmezufuhr kann gerade bei einer Kaltabfahrt nicht ausreichend schnell erfolgen, so dass eine Vereisung weiter auftreten kann.

Alternativ kann eine Standheizung zur Beheizung eingesetzt werden, die aber aufgrund der thermischen Trägheit des Systems ausreichend früh in Betrieb zu nehmen ist. Standheizungen bedürfen also einer vorausschauenden Einsatzplanung und verbrauchen regelmäßig viel Kraftstoff.

Weiter können bivalente Kraftstoffsysteme vorgehalten werden, bei denen der Kaltstart und die Kaltabfahrt auf Benzin erfolgt und erst danach auf den CNG- oder LNG-Kraftstoff umgestellt wird.

Die DE 10 2008 063 566 A1 ist auf einen Gasdruckregler mit einem Gehäuse gerichtet. In dem Gehäuse ist eine Beheizungsvorrichtung vorgesehen.

Die DE 10 2014 210 806 A1 ist auf eine gasbetriebene Verbrennungskraftmaschine gerichtet. Der gasförmige Kraftstoff kann beheizt werden, elektrisch oder über Abgas. Die Heizeinrichtung ist zwischen einem Tank für den Kraftstoff und der Verbrennungskraftmaschine angeordnet. Die US4688537 A ist auf einen Zuführsystem gerichtet, wobei die Beheizung des Gasdruckreglers einen Phasenübergang eines Wärmeübertragungsmedium umfasst.

Aufgabe der vorliegenden Erfindung ist es, die mit Bezug auf den Stand der Technik angeführten Probleme zumindest teilweise zu lösen. Insbesondere soll eine besonders vorteilhafte Beheizung bei einem Zuführsystem zum Zuführen eines CNG- oder LNG-Kraftstoffes vorgeschlagen werden.

Zur Lösung dieser Aufgaben trägt ein Zuführsystem mit den Merkmalen gemäß Patentanspruch 1 bei. Vorteilhafte Weiterbildungen sind Gegenstand der abhängigen Patentansprüche.

Es wird ein Zuführsystem zum Zuführen eines CNG- oder LNG-Kraftstoffes aus einem Tank hin zu einer Umsetzungsvorrichtung, z. B. einer Verbrennungskraftmaschine, vorgeschlagen. Das Zuführsystem weist zumindest eine Leitung, eine Heizeinrichtung und einen Gasdruckregler auf, wobei die Leitung über ein erstes Ende mit einem Tank verbindbar ist und über ein zweites Ende mit dem Gasdruckregler verbunden ist. Zumindest die Leitung (ggf. zusätzlich der Gasdruckregler) ist über die Heizeinrichtung beheizbar.

Insbesondere wird also vorgeschlagen, die sich zwischen Tank und Gasdruckregler erstreckende Leitung für den CNG- oder LNG-Kraftstoff zu beheizen. Damit weist der CNG- oder LNG-Kraftstoff vor der Entspannung über den Gasdruckregler bereits eine ausreichende Temperatur auf, so dass eine Vereisung ausgeschlossen werden kann.

Die Heizeinrichtung umfasst zumindest eine Heizquelle und eine erste Kammer, in der ein erstes Wärmeübertragungsmedium angeordnet ist. Eine Beheizung der Leitung erfolgt ausgehend von der Heizquelle und zumindest über das erste Wärmeübertragungsmedium.

Die Heizquelle ist vorliegend die Wärmequelle. Eine Temperaturerhöhung des CNG- oder LNG-Kraftstoffes wird also durch Wärmeleitung und/oder Wärmeübertragung ausgehend von der Heizquelle realisiert. Dabei kann die Heizquelle Wärme z. B. durch Verbrennen des CNG- oder LNG-Kraftstoffes oder durch elektrische Widerstandserwärmung erzeugen bzw. derart erzeugte Wärme verwenden.

Ausgehend von der Heizquelle erfolgt die Beheizung der Leitung insbesondere immer zumindest über das erste Wärmeübertragungsmedium. Das Wärmeübertragungsmedium kann ein festes, flüssiges oder gasförmiges Medium sein. Insbesondere weist das erste Wärmeübertragungsmedium einen anderen Werkstoff, ein anderes Material bzw. eine andere Zusammensetzung als die erste Kammer auf.

Insbesondere erstreckt sich die Leitung durch die erste Kammer und wird bevorzugt durch das erste Wärmeübertragungsmedium innerhalb der ersten Kammer insbesondere unmittelbar beaufschlagt.

Es ist auch möglich, dass die Leitung in wärmeleitender Verbindung zur ersten Kammer angeordnet ist und eine Wandung der ersten Kammer die wärmeleitende Verbindung zwischen Leitung und erstem Wärmeübertragungsmedium bildet.

Insbesondere ist die Leitung insbesondere gasdicht zur ersten Kammer bzw. zum ersten Wärmeübertragungsmedium angeordnet.

Die Heizeinrichtung umfasst zumindest eine zweite Kammer, in der ein zweites Wärmeübertragungsmedium angeordnet ist. Die Beheizung der Leitung erfolgt ausgehend von der Heizquelle zunächst über das zweite Wärmeübertragungsmedium und dann zumindest über das erste Wärmeübertragungsmedium.

Insbesondere kann so nationale oder regionale Gesetzgebung berücksichtigt werden, die z. B. einen Mindestabstand zwischen der Heizquelle und der den Kraftstoff führenden Leitung vorschreibt, bzw. bei der eine bestimmte Temperatur, z. B. des die Leitung kontaktierenden ersten Wärmeübertragungsmediums, nicht überschritten werden darf.

Die Beheizung umfasst zumindest einen Phasenübergang zumindest des ersten Wärmeübertragungsmediums (ggf. auch des zweiten Wärmeübertragungsmediums).

Insbesondere wird vorgeschlagen, dass zumindest das erste Wärmeübertragungsmedium während der Beheizung durch die Heizquelle und zur Beheizung der Leitung einen Phasenübergang von fest zu flüssig, von fest zu gasförmig und bevorzugt von flüssig zu gasförmig aufweist.

Insbesondere wechselt das erste Wärmeübertragungsmedium nach Erwärmung zumindest teilweise von einem flüssigen Zustand in einen gasförmigen Zustand und die Leitung ist durch eine Kondensation des ersten Wärmeübertragungsmediums beheizbar.

Insbesondere ist die Leitung unmittelbar von dem ersten Wärmeübertragungsmedium beaufschlagbar, bzw. erstreckt sich die Leitung durch die erste Kammer, so dass das erste Wärmeübertragungsmedium die Leitung direkt kontaktiert.

Vorteilhaft ist der Phasenübergang von flüssig zu gasförmig. Dabei kann das kalte erste Wärmeübertragungsmedium an einem Boden (relativ zur Richtung der Schwerkraft unten) der ersten Kammer erwärmt werden und sukzessive verdampfen. Das gasförmige erste Wärmeübertragungsmedium kann in der ersten Kammer aufsteigen und an einer Decke der ersten Kammer (in wärmeleitender Verbindung zur Leitung) oder direkt an der Leitung kondensieren und wieder zum Boden zurücktropfen.

Infolge des Kondensationsprozesses kann ein im Vergleich zu einer flüssig-flüssig oder gasförmig-gasförmig Ausführung des ersten Wärmeübertragungsmediums (also ohne Phasenübergang) ein sehr hoher Wärmeübergang realisiert werden. Weiter kann insbesondere durch die rechnerisch einfach zu ermittelnde Menge an zu verdampfender Flüssigkeit die Menge des ersten Wärmeübertragungsmediums im Vergleich zur flüssigflüssig Ausführung deutlich reduziert werden.

Insbesondere kontaktiert ausschließlich das verdampfte erste Wärmeübertragungsmedium die Leitung, so dass eine größtmögliche Fläche der Leitung für die Kondensation des ersten Wärmeübertragungsmediums verfügbar ist.

Die Ausführungen gelten insbesondere gleichermaßen für das zweite Wärmeübertragungsmedium. Dabei kondensiert das zweite Wärmeübertragungsmedium an einer Decke der zweiten Kammer, die in wärmeleitender Verbindung zur ersten Kammer angeordnet ist.

Insbesondere umfasst die Heizeinrichtung zumindest eine elektrische Heizquelle, bzw. erzeugt die Heizquelle Wärme durch elektrische Widerstandserwärmung.

Alternativ oder zusätzlich kann die Heizeinrichtung ein Abgas als eine Heizquelle umfassen. Insbesondere ist das Abgas durch die Verbrennung des CNG- oder LNG-Kraftstoffes gebildet. Insbesondere erfolgt die Verbrennung des CNG- oder LNG-Kraftstoffes ausschließlich in der Verbrennungskraftmaschine, wobei das Abgas ausgehend von der Verbrennungskraftmaschine an die Umgebung abgeführt wird. Alternativ kann auch ein anders erzeugtes Abgas als Heizquelle verwendet werden. Die Wärme des Abgases kann als Heizquelle genutzt werden.

Es wird weiter eine Umsetzungsvorrichtung, z. B. eine Verbrennungskraftmaschine, vorgeschlagen, zumindest umfassend das beschriebene Zuführsystem und stromabwärts der Umsetzungsvorrichtung eine Abgasleitung zur Ableitung des in der Umsetzungsvorrichtung (zu Abgas) umgesetzten CNG- oder LNG-Kraftstoffes.

Insbesondere umfasst die Heizeinrichtung ein Abgas als eine Heizquelle, wobei das Abgas durch die Verbrennung des CNG- oder LNG-Kraftstoffes in der Umsetzungsvorrichtung gebildet ist. Insbesondere ist das Abgas stromabwärts oder stromaufwärts einer Abgasnachbehandlungseinrichtung als Heizquelle entnehmbar. Insbesondere kann dabei berücksichtigt werden, dass dem Abgas Wärme erst stromabwärts einer Abgasnachbehandlungseinrichtung entzogen wird, so dass eine frühzeitige und effektive Abgasbehandlung durch die Abgasnachbehandlungseinrichtung ermöglicht wird.

Insbesondere ist das als Heizquelle genutzte Abgas über einen Bypass der Abgasleitung hin zur Heizeinrichtung leitbar.

Der Bypass kann über eine Regeleinrichtung hinsichtlich eines Volumenstroms des Abgases regelbar sein, z. B. über ein Ventil.

Weiter wird ein Kraftfahrzeug mit der beschriebenen Verbrennungskraftmaschine (als Umsetzungsvorrichtung) vorgeschlagen. Die Verbrennungskraftmaschine wird zum Antrieb des Kraftfahrzeuges eingesetzt.

Die Ausführungen zu dem Zuführsystem sind insbesondere auf die Umsetzungsvorrichtung und das Kraftfahrzeug übertragbar und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Umsetzungsvorrichtung (nicht Teil der Erfindung) mit einem Zuführsystem in einer ersten Ausführungsvariante;
- Fig. 2:: eine Umsetzungsvorrichtung (nicht Teil der Erfindung) mit einem Zuführsystem in einer zweiten Ausführungsvariante;
- Fig. 3:: eine Umsetzungsvorrichtung (nicht Teil der Erfindung) mit einem Zuführsystem in einer dritten Ausführungsvariante;
- Fig. 4:: eine Umsetzungsvorrichtung (nicht Teil der Erfindung) mit einem Zuführsystem in einer vierten Ausführungsvariante;
- Fig. 5:: einen Teil einer Heizeinrichtung (nicht Teil der Erfindung) mit einer ersten Kammer;
- Fig. 6:: einen Teil einer weiteren Heizeinrichtung (erfindungsgemäß) mit einer ersten Kammer und einer zweiten Kammer.

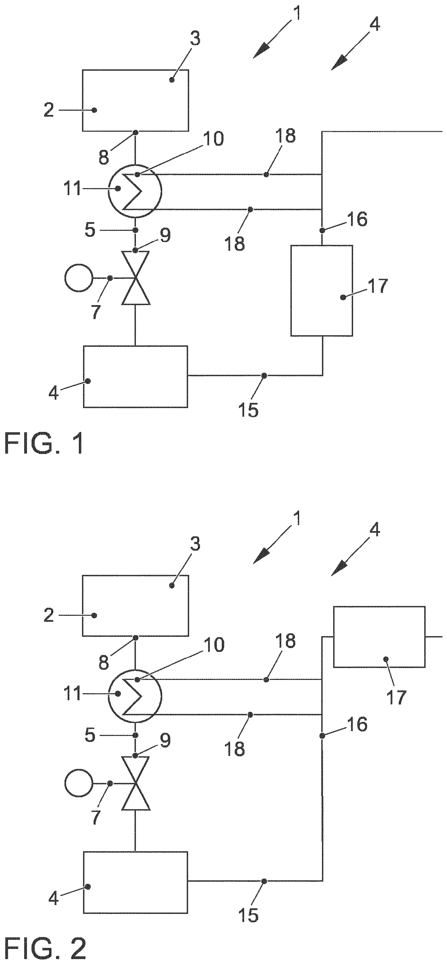

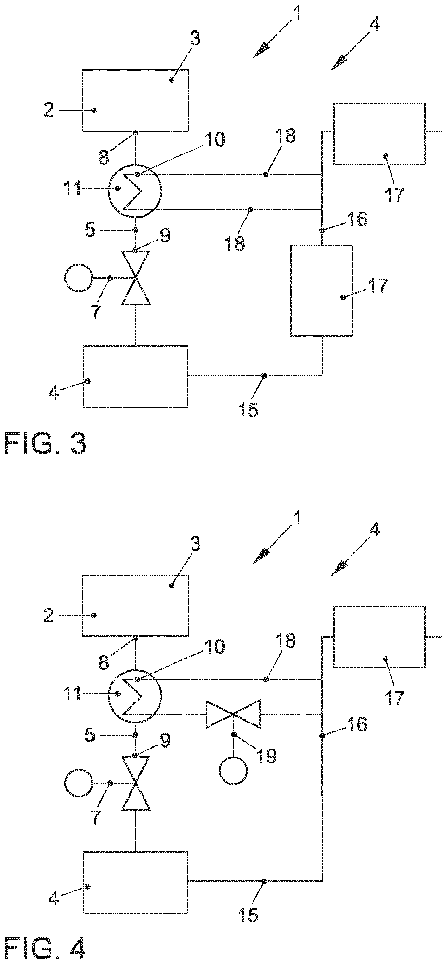

Fig. 1 zeigt eine Umsetzungsvorrichtung 4 mit einem Zuführsystem 1 in einer ersten Ausführungsvariante. Fig. 2 zeigt eine Verbrennungskraftmaschine 4 mit einem Zuführsystem 1 in einer zweiten Ausführungsvariante. Fig. 3 zeigt eine Umsetzungsvorrichtung 4 mit einem Zuführsystem 1 in einer dritten Ausführungsvariante. Fig. 4 zeigt eine Umsetzungsvorrichtung 4 mit einem Zuführsystem 1 in einer vierten Ausführungsvariante. Die Fig. 1 bis 4 werden im Folgenden gemeinsam beschrieben.

Die Umsetzungsvorrichtung 4 (eine Verbrennungskraftmaschine) umfasst das Zuführsystem 1 und stromabwärts der Umsetzungsvorrichtung 4 eine Abgasleitung 16 zur Ableitung des in der Umsetzungsvorrichtung 4 erzeugten Abgases 15.

Hier umfasst die Heizeinrichtung 6 ein Abgas 15 als eine Heizquelle 10, wobei das Abgas 15 durch die Verbrennung des CNG- oder LNG-Kraftstoffes 2 in der Umsetzungsvorrichtung 4 gebildet ist. Das Abgas 15 ist stromabwärts (Fig. 1) oder stromaufwärts (Fig. 2 und 4), oder stromabwärts und stromaufwärts (Fig. 3) einer Abgasnachbehandlungseinrichtung 17 als Heizquelle 10 entnehmbar.

Das als Heizquelle 10 genutzte Abgas 15 ist über einen Bypass 18 der Abgasleitung 16 hin zur Heizeinrichtung 6 leitbar.

Der Bypass 18 kann über eine Regeleinrichtung 19 hinsichtlich eines Volumenstroms des Abgases 15 regelbar sein, z. B. über ein Ventil (Fig. 4).

Das Zuführsystem 1 weist eine Leitung 5, eine Heizeinrichtung 6 und einen Gasdruckregler 7 auf, wobei die Leitung 5 über ein erstes Ende 8 mit einem Tank 3 verbunden ist und über ein zweites Ende 9 mit dem Gasdruckregler 7 verbunden ist. Die Leitung 5 ist über die Heizeinrichtung 6 beheizbar.

Die Heizeinrichtung 6 umfasst eine Heizquelle 10 und eine erste Kammer 11, in der ein erstes Wärmeübertragungsmedium 12 angeordnet ist. Eine Beheizung der Leitung 5 erfolgt ausgehend von der Heizquelle 10 und zumindest über das erste Wärmeübertragungsmedium 12.

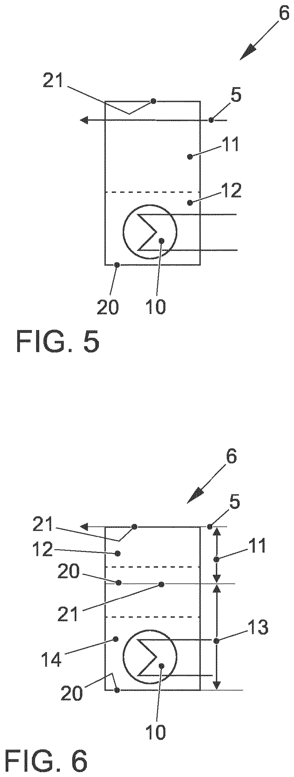

Fig. 5 zeigt einen Teil einer Heizeinrichtung 6 mit einer ersten Kammer 11. Die Leitung 5 erstreckt sich durch die erste Kammer 11 und wird durch das erste Wärmeübertragungsmedium 12 innerhalb der ersten Kammer 11 unmittelbar beaufschlagt. Die Leitung 5 ist gasdicht zur ersten Kammer 11 und zum ersten Wärmeübertragungsmedium 12 angeordnet bzw. ausgeführt.

Das erste Wärmeübertragungsmedium 12 weist während der Beheizung durch die Heizquelle 10 und zur Beheizung der Leitung 5 einen Phasenübergang von flüssig zu gasförmig auf. Die Leitung 5 ist durch eine Kondensation des ersten Wärmeübertragungsmediums 12 beheizbar.

Die Leitung 5 wird unmittelbar von dem ersten Wärmeübertragungsmedium 12 beaufschlagt, da die Leitung 5 sich durch die erste Kammer 11 erstreckt.

Das kalte erste Wärmeübertragungsmedium 12 wird im Bereich eines Bodens 20 (relativ zur Richtung der Schwerkraft unten) der ersten Kammer 11 erwärmt und verdampft sukzessive. Das gasförmige erste Wärmeübertragungsmedium 12 kann in der ersten Kammer 11 aufsteigen und direkt an der Leitung 5 kondensieren und wieder zum Boden 20 zurücktropfen.

Ausschließlich das verdampfte erste Wärmeübertragungsmedium 12 kontaktiert die Leitung 5, so dass eine größtmögliche Fläche der Leitung 5 für die Kondensation des ersten Wärmeübertragungsmediums 12 verfügbar ist.

Fig. 6 zeigt einen Teil einer weiteren Heizeinrichtung 6 mit einer ersten Kammer 11 und einer zweiten Kammer 13. Hier ist die Leitung 5 in wärmeleitender Verbindung zur ersten Kammer 11 angeordnet und eine Wandung (eine Decke 21) der ersten Kammer 11 bildet die wärmeleitende Verbindung zwischen der Leitung 5 und dem erstem Wärmeübertragungsmedium 12.

Die Heizeinrichtung 6 umfasst zusätzlich eine zweite Kammer 13, in der ein zweites Wärmeübertragungsmedium 14 angeordnet ist. Die Beheizung der Leitung 5 erfolgt ausgehend von der Heizquelle 10 zunächst über das zweite Wärmeübertragungsmedium 14 und dann zumindest über das erste Wärmeübertragungsmedium 12.

## Patentansprüche

1. Zuführsystem (1) zum Zuführen eines CNG- oder LNG-Kraftstoffes (2) aus einem Tank (3) hin zu einer Umsetzungsvorrichtung (4), wobei das Zuführsystem (1) zumindest eine Leitung (5), eine Heizeinrichtung (6) und einen Gasdruckregler (7) aufweist, wobei die Leitung (5) über ein erstes Ende (8) mit dem Tank (3) verbindbar ist und über ein zweites Ende (9) mit dem Gasdruckregler (7) verbunden ist; wobei zumindest die Leitung (5) über die Heizeinrichtung (6) beheizbar ist; wobei die Heizeinrichtung (6) zumindest eine Heizquelle (10) und eine erste Kammer (11) umfasst, in der ein erstes Wärmeübertragungsmedium (12) angeordnet ist; wobei eine Beheizung der Leitung (5) ausgehend von der Heizquelle (10) und zumindest über das erste Wärmeübertragungsmedium (12) erfolgt; wobei die Beheizung zumindest einen Phasenübergang zumindest des ersten Wärmeübertragungsmediums (12) umfasst; wobei die Heizeinrichtung (6) zumindest eine zweite Kammer (13) umfasst, in der ein zweites Wärmeübertragungsmedium (14) angeordnet ist; wobei die Beheizung der Leitung (5) ausgehend von der Heizquelle (10) zunächst über das zweite Wärmeübertragungsmedium (14) und dann zumindest über das erste Wärmeübertragungsmedium (12) erfolgt.

2. Zuführsystem (1) nach Patentanspruch 1, wobei das erste Wärmeübertragungsmedium (12) nach Erwärmung zumindest teilweise von einem flüssigen Zustand in einen gasförmigen Zustand wechselt und die Leitung (5) durch eine Kondensation des ersten Wärmeübertragungsmediums (12) beheizbar ist.

3. Zuführsystem (1) nach einem der vorhergehenden Patentansprüche, wobei die Leitung (5) unmittelbar von dem ersten Wärmeübertragungsmedium (12) beaufschlagbar ist.

4. Zuführsystem (1) nach einem der vorhergehenden Patentansprüche, wobei die Heizeinrichtung (6) zumindest eine elektrische Heizquelle (10) umfasst.

5. Zuführsystem (1) nach einem der vorhergehenden Patentansprüche, wobei die Heizeinrichtung (6) ein Abgas (15) als eine Heizquelle (10) umfasst, wobei das Abgas (15) durch die Verbrennung des CNG- oder LNG-Kraftstoffes (2) gebildet ist.

6. Umsetzungsvorrichtung (4), zumindest umfassend ein Zuführsystem (1) nach einem der vorhergehenden Patentansprüche und stromabwärts der Umsetzungsvorrichtung (4) eine Abgasleitung (16) zur Ableitung des in der Umsetzungsvorrichtung (4) umgesetzten CNG- oder LNG-Kraftstoffes (2).

7. Umsetzungsvorrichtung (4) nach Patentanspruch 6, wobei die Heizeinrichtung (6) ein Abgas (15) als eine Heizquelle (10) umfasst, wobei das Abgas (15) durch die Verbrennung des CNG- oder LNG-Kraftstoffes (2) in der Umsetzungsvorrichtung (4) gebildet ist; wobei das Abgas (15) stromabwärts oder stromaufwärts einer Abgasnachbehandlungseinrichtung (17) als Heizquelle (10) entnehmbar ist.

8. Umsetzungsvorrichtung (4) nach Patentanspruch 7, wobei das als Heizquelle (10) genutzte Abgas (15) über einen Bypass (18) der Abgasleitung (16) hin zur Heizeinrichtung (5) leitbar ist; wobei der Bypass (18) über eine Regeleinrichtung (19) hinsichtlich eines Volumenstroms des Abgases (15) regelbar ist.

## Claims

1. Feed system (1) for feeding a CNG or LNG fuel (2) from a tank (3) to a conversion device (4), wherein the feed system (1) has at least one line (5), a heating unit (6), and a gas pressure regulator (7), wherein the line (5) is connectable to the tank (3) via a first end (8) and is connected to the gas pressure regulator (7) via a second end (9); wherein at least the line (5) is heatable via the heating unit (6); wherein the heating unit (6) comprises at least one heating source (10) and a first chamber (11) in which a first heat transfer medium (12) is arranged; wherein a heating of the line (5) takes place starting from the heat source (10) and at least via the first heat transfer medium (12); wherein the heating comprises at least one phase transition of at least the first heat transfer medium (12); wherein the heating unit (6) comprises at least one second chamber (13) in which a second heat transfer medium (14) is arranged; wherein the heating of the line (5), starting from the heat source (10), takes place first via the second heat transfer medium (14) and then at least via the first heat transfer medium (12).

2. Feed system (1) according to claim 1, wherein the first heat transfer medium (12) changes at least partially from a liquid state to a gaseous state after heating, and the line (5) can be heated by condensation of the first heat transfer medium (12).

3. Feed system (1) according to one of the preceding claims, wherein the line (5) can be directly acted upon by the first heat transfer medium (12).

4. Feed system (1) according to one of the preceding claims, wherein the heating unit (6) comprises at least one electrical heat source (10).

5. Feed system (1) according to one of the preceding claims, wherein the heating unit (6) comprises an exhaust gas (15) as a heat source (10), wherein the exhaust gas (15) is formed by the combustion of the CNG or LNG fuel (2).

6. Conversion device (4), comprising at least one feed system (1) according to one of the preceding claims and, downstream of the conversion device (4), an exhaust gas line (16) for discharging the CNG or LNG fuel (2) converted in the conversion device (4).

7. Conversion device (4) according to claim 6, wherein the heating unit (6) comprises an exhaust gas (15) as a heat source (10), wherein the exhaust gas (15) is formed by the combustion of the CNG or LNG fuel (2) in the conversion device (4); wherein the exhaust gas (15) is removable, downstream or upstream of an exhaust gas aftertreatment unit (17), as the heat source (10).

8. Conversion device (4) according to claim 7, wherein the exhaust gas (15) used as the heat source (10) can be conducted to the heating unit (5) via a bypass (18) of the exhaust gas line (16); wherein the bypass (18) can be regulated with respect to a volume flow of the exhaust gas (15) by a regulating unit (19).

## Revendications

1. Système d'alimentation (1) permettant l'alimentation en carburant GNC ou GNL (2) à partir d'un réservoir (3) vers un dispositif de conversion (4), le système d'alimentation (1) présentant au moins une conduite (5), un dispositif de chauffage (6) et un régulateur de pression de gaz (7), la conduite (5) pouvant être connectée à travers une première extrémité (8) au réservoir (3) et étant connectée à travers une seconde extrémité (9) au régulateur de pression de gaz (7) ; au moins la conduite (5) pouvant être chauffée au moyen du dispositif de chauffage (6) ; le dispositif de chauffage (6) comprenant au moins une source de chaleur (10) et une première chambre (11), dans laquelle un premier fluide de transfert de chaleur (12) est disposé ; le chauffage de la conduite (5) étant effectué à partir de la source de chaleur (10) et au moins au moyen du premier fluide de transfert de chaleur (12) ; le chauffage comprenant au moins une transition de phase au moins du premier fluide de transfert de chaleur (12), le dispositif de chauffage (6) comprenant au moins une deuxième chambre (13), dans laquelle un deuxième fluide de transfert de chaleur (14) est disposé ; le chauffage de la conduite (5) étant effectué à partir de la source de chaleur (10) d'abord au moyen du deuxième fluide de transfert de chaleur (14) et ensuite au moins au moyen du premier fluide de transfert de chaleur (12).

2. Système d'alimentation (1) selon la revendication 1, le fluide de transfert de chaleur (12) changeant, après le chauffage, au moins partiellement d'un état liquide à un état gazeux et la conduite (5) pouvant être chauffée par une condensation du premier fluide de transfert de chaleur (12).

3. Système d'alimentation (1) selon l'une quelconque des revendications précédentes, la conduite (5) étant sollicitée directement par le premier fluide de transfert de chaleur (12).

4. Système d'alimentation (1) selon l'une quelconque des revendications précédentes, le dispositif de chauffage (6) comprenant au moins une source de chaleur (10) électrique.

5. Système d'alimentation (1) selon l'une quelconque des revendications précédentes, le dispositif de chauffage (6) comprenant un gaz d'échappement (15) comme une source de chaleur (10), le gaz d'échappement étant formé par la combustion du carburant CNG ou LNG (2).

6. Dispositif de conversion (4) comprenant au moins un système d'alimentation (1) selon l'une quelconque des revendications précédentes et en aval du dispositif de conversion (4) une conduite de gaz d'échappement (16) pour l'évacuation du carburant CNG ou LNG (2) converti dans le dispositif de conversion (4).

7. Dispositif de conversion (4) selon la revendication 6, le dispositif de chauffage (6) comprenant un gaz d'échappement (15) comme source de chaleur (10), le gaz d'échappement (15) étant formé par la combustion du carburant CNG ou LNG (2) dans le dispositif de conversion (4), le gaz d'échappement (15) pouvant être extrait comme source de chaleur (10) en aval ou en amont d'un dispositif de post-traitement des gaz d'échappement (17).

8. Dispositif de conversion (4) selon la revendication 7, le gaz d'échappement (15) utilisé comme source de chaleur (10) pouvant être guidé à travers un pontage (18) de la conduite de gaz d'échappement (16) vers le dispositif de chauffage (5), le pontage (18) pouvant être réglé au moyen d'un dispositif de réglage (19) en ce qui concerne un débit volumique du gaz d'échappement (15).
